Europäisches Patentamt

European Patent Office

Office européen des brevets

(19)

(11) EP 0 827 771 A1

(12) DEMANDE DE BREVET EUROPEEN

(43) Date de publication:
11.03.1998 Bulletin 1998/11

(51) Int Cl.6: **B01D 53/04**, B01D 53/047, B01J 20/18, C01B 13/02

(21) Numéro de dépôt: 97401888.9

(22) Date de dépôt: 06.08.1997

(84) Etats contractants désignés:
AT BE CH DE DK ES FI FR GB GR IE IT LI LU MC NL PT SE

(30) Priorité: 06.09.1996 FR 9610905

(71) Demandeur: L'AIR LIQUIDE, SOCIETE ANONYME POUR
L'ETUDE ET L'EXPLOITATION DES PROCEDES GEORGES CLAUDE
75321 Paris Cédex 07 (FR)

(72) Inventeurs:
• Labasque, Jacques
  78000 Versailles (FR)
• Moreau, Serge
  78140 Velizy-Villacoublay (FR)
• Rouge, Dominique
  92240 Malakoff (FR)

(74) Mandataire: Le Moenner, Gabriel et al
L'AIR LIQUIDE S.A.,
Service Propriété Industrielle,
75, quai d'Orsay
75321 Paris Cédex 07 (FR)

(54) **Procédé pour la séparation de mélanges gazeux contenant de l'oxygène et de l'azote**

(57) L'invention a pour objet un procédé pour la séparation d'un mélange gazeux contenant de l'oxygène et de l'azote, comprenant la mise en contact du mélange dans une zone d'adsorption, avec un premier adsorbant sélectif de l'azote de type faujasite échangée à au moins 80% au lithium dont le rapport Si/Al est inférieur à 1,5 et un second adsorbant sélectif de l'azote de type zéolite échangée par des cations divalents, tels les cations de métaux alcalino-terreux ou de métaux de transition. Le second adsorbant se caractérise par une capacité d'adsorption de l'azote $C_2$ inférieure à la capacité d'adsorption de l'azote $C_1$ caractérisant le premier adsorbant, et une sélectivité d'adsorption de l'azote par rapport à l'oxygène ($1.10^5$ Pa, 20°C) supérieure ou égale à 3.

**Description**

L'invention concerne un procédé de séparation d'un mélange gazeux contenant de l'oxygène et de l'azote, et plus particulièrement un perfectionnement des procédés conventionnels d'adsorption par variation de la pression, tels les procédés PSA ou VSA, incluant éventuellement une étape de désorption sous pression subatmosphérique.

La récupération de l'oxygène (ou de gaz enrichis en oxygène) à partir de mélanges gazeux contenant de l'oxygène et de l'azote, tel l'air, est d'un grand intérêt sur le plan industriel, l'oxygène trouvant de multiples applications dans de nombreux domaines; notamment dans la fabrication de l'acier, du verre ou du papier, la médecine, la soudure de métaux, la combustion ou la dépollution.

De nombreux procédés de séparation mettent en jeu la mise en contact, dans une zone d'adsorption, du mélange gazeux à séparer, contenant l'azote et l'oxygène, avec un adsorbant zéolitique permettant une adsorption sélective de l'azote en présence d'oxygène, de façon à récupérer en sortie de la zone d'adsorption un gaz enrichi en oxygène, puis la régénération de la zéolite par désorption de l'azote. Lors de ces différentes étapes, les conditions de température et de pression sont fixées de façon à optimiser l'efficacité de l'adsorption et de la désorption de l'azote. Il est notoire que des températures basses favorisent l'adsorption, alors que des températures élevées facilitent les processus de désorption de l'azote.

Des études récentes ont montré que l'utilisation de zéolites échangées au lithium, notamment de faujasites échangées au lithium, en tant qu'adsorbant sélectif de l'azote, conduisent à une nette amélioration des performances des procédés PSA ou VSA de production de l'oxygène.

Toutefois, le coût élevé de fabrication de telles zéolites a limité jusqu'à présent leur développement. En effet, les sels de lithium utilisés dans la fabrication des adsorbants zéolitiques sont très onéreux. Plus le taux d'échange à atteindre est élevé, plus la quantité de sels de lithium nécessaire pour réaliser l'échange augmente. Echanger des particules d'adsorbant avec des cations lithium se traduit donc inévitablement par une augmentation des coûts de production des particules d'adsorbant et de l'oxygène produit.

Ainsi, lorsque l'on souhaite utiliser, dans un procédé PSA ou VSA, des adsorbants de type zéolite échangée au lithium à un taux d'au moins 80 %, il est indispensable de veiller à ne pas accroître les coûts de manière inadmissible.

Une première solution consiste à remplacer une partie des cations lithium par d'autres cations mono-, di- ou trivalents. C'est ce que propose EP-A-0 667 183, qui décrit un procédé de séparation de l'air mettant en oeuvre une zéolite X échangée par 50 à 95 % de lithium, 4 à 50% d'aluminium, de cérium ou de lanthane, et 0 à 15% d'autres ions. Le fait de devoir recourir à au moins deux étapes d'échange d'ions, pendant la fabrication des zéolites, ne peut être considéré comme satisfaisant des points de vue industriel et économique. De plus, les performances de tels adsorbants n'ont pas encore été démontrées industriellement et les ions, sous forme de sels, utilisés pour être substitués aux ions lithium sont souvent aussi, voire plus chers que les ions lithium.

Une deuxième solution consiste à remplacer une partie du lit d'adsorbant de type zéolite échangée au lithium par un adsorbant d'un autre type. Cette solution a été retenue par le brevet US 5,203,887, lequel décrit une zone d'adsorption comprenant deux lits d'adsorbant disposés en série; le premier étant constitué d'une zéolite X échangée à au moins 80% au lithium, le second étant constitué d'une zéolite conventionnelle X non-échangée. Cependant les performances obtenues grâce à l'utilisation de ce lit supplémentaire d'adsorbant de type zéolite non-échangée sont médiocres et bien moindre, en ce qui concerne le rendement et la productivité du procédé, que celles obtenues au moyen d'un lit unique constitué uniquement de zéolites échangées au lithium.

Il existe donc, dans l'art antérieur, un besoin pour un procédé, de type PSA ou VSA, qui permettrait d'obtenir des performances en rendement et productivité au moins équivalentes, voire supérieures, à celles obtenues pour des tamis ne comportant que des particules d'adsorbant de type zéolite échangée au lithium à des taux d'au moins 80%, voire 90 ou 95%, et qui serait moins pénalisant du point de vue des coûts.

La Demanderesse a maintenant découvert de façon surprenante, qu'en combinant un premier lit d'une zéolite de type X, ou faujasite, échangée à au moins 80% au lithium avec un second lit d'une zéolite échangée avec des cations divalents, on obtient une zone d'adsorption améliorée, utilisable dans les procédés de séparation de mélanges gazeux contenant de l'azote et de l'oxygène, dont le coût de revient est réduit par rapport aux zones d'adsorption de l'état de la technique exclusivement constituées de zéolites échangées au lithium.

Ainsi, la présente invention propose un procédé de séparation de mélanges gazeux contenant de l'azote et de l'oxygène utilisant, en tant que zone d'adsorption la combinaison d'un lit constitué de faujasite échangée à au moins 80% au lithium avec un lit constitué d'une zéolite échangée avec des cations divalents. Les performances du procédé de l'invention se sont révélées supérieures à celles des procédés correspondants utilisant comme seul adsorbant une zéolite au lithium, pour une quantité totale en volume d'adsorbant équivalente. En d'autres termes, le fait d'utiliser un second lit constitué d'une zéolite échangée par des cations divalents, permet non seulement de diminuer la taille du lit constitué de zéolites échangées au lithium, mais aussi d'obtenir des performances en rendement et productivité supérieures par rapport aux procédés mettant en oeuvre un lit uniquement constitué de particules d'adsorbant de type zéolite à fort taux d'échange au lithium, c'est-à-dire à un taux d'échange supérieur à 95 % et tendant vers 100 %; ce qui n'est nullement évident au vu de l'art antérieur. Cette supériorité du procédé de l'invention sur les procédés classiques sera illustrée ci-après à l'aide d'exemples.

De façon plus précise, l'invention concerne un procédé pour la séparation d'un mélange gazeux contenant de l'oxygène et de l'azote, comprenant la mise en contact du mélange à séparer dans une zone d'adsorption, avec, dans un ordre quelconque, un premier adsorbant sélectif de l'azote, ledit premier adsorbant étant une zéolite de type faujasite échangée à au moins 80% au lithium dont le rapport Si/Al est inférieur à 1,5 et un second adsorbant sélectif de l'azote, ledit second adsorbant étant une zéolite échangée comprenant des cations divalents choisis dans le groupe constitué des cations de métaux alcalino-terreux et des cations de métaux de transition, ledit second adsorbant étant caractérisé par :

- une capacité d'adsorption de l'azote $C_2$ inférieure à la capacité d'adsorption de l'azote $C_1$ caractérisant ledit premier adsorbant; et
- une sélectivité d'adsorption de l'azote par rapport à l'oxygène sous $1.10^5$ Pa et à 20°C supérieure ou égale à 3.

Selon l'invention, le rapport volumique de l'oxygène à l'azote dans le mélange à séparer peut varier de façon quelconque. Le procédé de l'invention peut, par exemple, être utilisé pour la séparation de l'oxygène et de l'azote contenus dans l'air.

Lorsque le mélange à séparer contenant de l'azote et de l'oxygène comprend aussi une ou plusieurs autres impuretés, telle que la vapeur d'eau, on peut éliminer cette ou ces impuretés au moyen d'un lit de particules placé en amont des lits d'adsorbant de type zéolitiques; le choix des particules destinées à éliminer la ou les impuretés étant réalisé par l'homme de l'art en fonction de la ou des impuretés à éliminer. Afin d'éliminer la vapeur d'eau, on choisit, par exemple, des particules d'alumine placées à l'entrée de la zone d'adsorption, de manière à effectuer la séparation ultérieure de l'oxygène et de l'azote sur un mélange gazeux sec.

De façon schématique, les cristaux de zéolites sont constitués de réseaux de tétraèdres de $SiO_4$ et de $AlO_4$ imbriqués, dans lesquels sont emprisonnés des cations assurant la neutralité électrique de la zéolite, par exemple des cations de métaux alcalins ou alcalino-terreux, tels le sodium, le potassium, le calcium ou le magnésium.

Suivant l'invention, les premier et second adsorbants sont des zéolites échangées; lorsque le réseau cristallin contient comme seuls cations des cations $Na^+$ la zéolite est dite non-échangée. A l'inverse lorsque la zéolite comprend d'autres cations métalliques, outre le sodium, tel que $Li^+$, les cations de métaux alcalino-terreux ou les cations de métaux de transition, alors la zéolite est dite échangée. En effet, les zéolites sont généralement d'abord synthétisées sous forme $Na^+$ et subissent ensuite une ou plusieurs étapes d'échange de cations, c'est-à-dire l'introduction de cations dans le réseau cristallin, tels que les cations $Li^+$, $Ca^{2+}$, $Sr^{2+}$, $Ba^{2+}$ ou $Mg^{2+}$; lesdits cations se substituant à des cations $Na^+$.

Le taux ou degré d'échange d'une zéolite est donc une mesure de la quantité de cations, autres que $Na^+$, introduite.

Dans le cas des zéolites échangées au lithium, le taux d'échange représente le pourcentage de motifs $AlO_2^-$ de la zéolite associés à des cations lithium. Aussi l'expression zéolite échangée à au moins 80% au lithium désigne une zéolite dont au moins 80% des motifs $AlO_2^-$ sont associés à des cations $Li^+$ et au plus 20% sont associés à des cations $Na^+$.

De la même façon, dans le cas de zéolites échangées avec des cations divalents, le taux d'échange représente le pourcentage de motifs $AlO_2^-$ de la zéolite associés à des cations divalents.

Selon l'invention, ledit premier adsorbant est une faujasite, c'est-à-dire une zéolite de type X, échangée à au moins 80% au lithium. De préférence, la faujasite est échangée à au moins 86% au lithium, mieux encore à au moins 90% au lithium.

Pour la préparation d'une faujasite au lithium, on pourra utiliser le protocole opératoire suivant en partant d'une zéolite cristalline de type faujasite. Au travers d'une colonne garnie de faujasite, maintenue à une température comprise entre 70 et 95°C, on fait percoler une solution aqueuse de sels de lithium, telle qu'une solution aqueuse de chlorure de lithium, dont on ajuste le pH entre 8 et 10 par addition de lithine. Cette opération est poursuivie pendant le temps nécessaire pour permettre l'échange d'au moins 80% des cations de la zéolite. On estime généralement que pour introduire une quantité donnée d'ions lithium dans la zéolite, il est nécessaire d'éluer la colonne avec 1,2 à 12 fois cette quantité d'ions lithium. On détermine ainsi facilement le volume de la solution de sels de lithium devant être déversée en tête de colonne, compte-tenu de la normalité de la solution. De préférence, on utilisera une solution aqueuse de chlorure de lithium dont la normalité est comprise entre 0,5 et 1,5 N, de préférence 1 N. De façon avantageuse, on maintiendra à 95°C la température de la zéolite ainsi que celle de la solution de chlorure de lithium pendant toute la durée de l'échange d'ions.

Ce mode opératoire n'est proposé qu'à titre illustratif et nullement limitatif; tout autre procédé connu de l'état de la technique permettant d'aboutir à une zéolite de type faujasite échangée au lithium peut être mis en oeuvre.

On notera que suivant le volume et la composition de la solution aqueuse de chlorure de lithium éluée au travers de la colonne, il est possible d'ajuster le degré d'échange.

Dans le cadre de l'invention, l'utilisation en tant que premier adsorbant, d'une faujasite échangée à au moins 80% au lithium dans laquelle auraient été introduits des cations di- ou trivalents, tels que les cations de métaux alcalino-terreux ou les cations de métaux de transition, n'est pas exclue dès lors que, dans la faujasite résultante, le pourcentage de motifs $AlO_2$- associés à des cations $Li^+$ reste au moins égal à 80%.

Le second adsorbant mis en oeuvre dans le procédé de l'invention est une zéolite échangée dont la structure cristalline n'est pas critique. En d'autres termes, ledit second adsorbant peut dériver indifféremment d'une zéolite de type X, ou A ou de tout autre type de zéolite. Toutefois, on préfère avoir recours à une zéolite X ou A.

De manière préférée, le rapport Si/Al dudit second adsorbant est compris entre 1 et 3.

Les caractéristiques essentielles de cette zéolite sont les suivantes :

(i) - son réseau cristallin comprend des cations divalents choisis dans le groupe constitué des cations de métaux alcalino-terreux et des cations des métaux de transition;

(ii)- sa capacité d'adsorption de l'azote $C_2$ est inférieure à la capacité d'adsorption de l'azote $C_1$ caractérisant la faujasite échangée à au moins 80% au lithium; et

(iii) - sa sélectivité d'adsorption de l'azote par rapport à l'oxygène sous une pression de $1.10^5$ Pa et à 20°C est supérieure ou égale à 3.

De manière préférée, le second adsorbant est une zéolite comprenant des cations divalents de métaux alcalino-terreux, tels que les cations $Ca^{2+}$, $Mg^{2+}$, $Ba^{2+}$ et $Sr^{2+}$; les cations $Ca^{2+}$ sont préférés. Aussi, on sélectionnera avantageusement une zéolite 10X échangée au calcium ou une zéolite 5A échangée au calcium. On préfère, pour des raisons économiques, que ledit second adsorbant soit exempt de cations $Li^+$.

La condition (ii) étant posée, on préfère que la capacité d'adsorption de l'azote $C_2$ caractérisant le second adsorbant $(1.10^5$ Pa, 20°C) soit supérieure à 12 $cm^3$/g, mieux encore supérieure à 14 $cm^3$/g.

La sélectivité d'adsorption de l'azote par rapport à l'oxygène est le rapport de la capacité d'adsorption de l'azote à la capacité d'adsorption de l'oxygène; ces deux capacités étant mesurées sous une pression de $1.10^5$ Pa et à 20°C.

Ainsi, de façon à être opérationnel, ledit second adsorbant présente une sélectivité relativement élevée vis-à-vis de l'azote et en tout état de cause supérieure à 3, une valeur minimale de 3,2 étant souhaitable.

Par ailleurs, il est souhaitable que le second adsorbant soit, en outre, caractérisé par une valeur du paramètre $ak_2$ supérieure à celle du paramètre $ak_1$, lesdits paramètres $ak_2$ et $ak_1$ caractérisant la cinétique d'adsorption de l'azote respectivement desdits premier et second adsorbants conformément au modèle de la Linear Driving Force défini ci-après.

Différents ouvrages définissent le paramètre cinétique ak, lequel intervient dans la modélisation des processus d'adsorption et plus particulièrement dans le modèle de la Linear Driving Force. On peut notamment faire référence à "Principles of adsorption and adsorption processes" John-Wiley & Sons, 1984, p. 242-243 de D.M. Ruthven ou bien "Pressure Swing Adsorption", VCS Publishers, 1994, p. 58-61, ou encore "Gas separation by adsorption processes", Yang Butterworth Publishers, 1987, p. 132-134.

La détermination de la valeur du paramètre $a_k$ peut être réalisée, de façon simple et connue par l'homme de l'art, à partir d'une courbe de percée d'un mélange oxygène/azote.

Lorsque la capacité d'adsorption de la zéolite croît de façon linéaire en fonction de la pression à laquelle est soumise la zone d'adsorption, et donc l'adsorbant, on peut montrer que le paramètre $a_k$ satisfait l'équation suivante :

$$a_k = 2.\frac{\mu}{\sigma^2} \tag{1}$$

où $\mu$ représente le temps moyen de sortie du front d'adsorption et $\sigma$ représente la largeur temporelle du front d'adsorption.

Pour obtenir une courbe de percée, il convient de se placer dans des conditions particulières de température, de pression et de concentration en azote afin que l'équation (1) soit vérifiée, et ceci en vue d'une évaluation simple du paramètre $a_k$ : plus précisément, on choisira un mélange de départ d'azote et d'oxygène comprenant moins de 10% en volume d'azote. On fixera en outre la pression au sein de ladite zone d'adsorption à une valeur inférieure à $2.10^5$ Pa tout en vérifiant que celle-ci appartient au domaine de linéarité de la courbe représentant de variation de la capacité d'adsorption en fonction de la pression. Ces conditions sont facilement déterminées par le spécialiste.

Le protocole opératoire suivi pour le tracé de la courbe de percée est, par exemple, le suivant :

A l'une des extrémités de la zone d'adsorption initialement en équilibre avec de l'oxygène pur, on injecte (à débit constant) un mélange d'azote et d'oxygène. Dans un premier temps, la totalité de l'azote contenu dans le mélange se trouve adsorbé sur l'adsorbant, de l'oxygène pur étant récupéré en sortie de la zone d'adsorption. Dans la zone d'adsorption, l'adsorbant situé en entrée de zone capte le premier les molécules d'azote du mélange $O_2/N_2$. Pendant ce

même temps, l'adsorbant à proximité de la sortie de la zone d'adsorption, étant exclusivement au contact d'un flux d'oxygène, reste intact. La limite entre l'adsorbant encore actif situé du côté de la sortie de la zone d'adsorption et l'adsorbant inactivé (dû à l'adsorption de molécules d'azote) localisé du côté de l'entrée de ladite zone d'adsorption est couramment désignée sous le nom de front d'adsorption. Celui-ci une fois formé avance progressivement le long de la zone d'adsorption par adsorption des molécules d'azote du mélange à séparer.

On comprend qu'une fois le front d'adsorption arrivé en fin de la zone d'adsorption, le gaz récupéré en sortie de ladite zone contienne de l'azote en plus de l'oxygène attendu, dans la mesure où la totalité du lit d'adsorbant contenu dans ladite zone d'adsorption se trouve saturée.

En raison de la complexité des mécanismes de diffusion moléculaire et de l'hétérogénéité des agglomérats de zéolite, la saturation de l'adsorbant ne se produit pas de façon uniforme dans la direction de l'avancée du mélange gazeux au sein de la zone d'adsorption. Ainsi, lorsque celui-ci atteint la fin de la zone d'adsorption, la concentration de l'azote dans le mélange récupéré en sortie croît progressivement.

La courbe de percée représente la variation de la concentration en oxygène en sortie de la zone d'adsorption en fonction du temps; le temps O correspondant à l'instant précis où la phase d'adsorption est initiée. Cette courbe est définie par l'équation c = f(t) où c représente la concentration en oxygène dans le mélange gazeux récupéré en sortie, t est la variable temps et f est la fonction figurant les variations de la concentration c en fonction du temps t.

Pour la détermination du paramètre ak, il convient d'enregistrer la courbe de percée. Ceci est réalisé de façon connue en soi par simple mesure de la concentration en oxygène dans le mélange gazeux récupéré en sortie de la zone d'adsorption à différents instants.

Le temps moyen $\mu$ de sortie du front est calculé à partir de la courbe de percée f(t) selon l'équation (a) suivante :

$$\mu \; = \; \frac{\displaystyle\int_0^\infty t.f'(t).dt}{\displaystyle\int_0^\infty f'(t).dt} \qquad (a)$$

où f'(t) représente la dérivée de la fonction f(t) définie ci-dessus.

De même, la largeur temporelle du front répond à l'équation (b) suivante :

$$\sigma^2 \; = \; \frac{\displaystyle\int_0^\infty (t-\mu)^2.f'(t).dt}{\displaystyle\int_0^\infty f'(t).dt} \qquad (b)$$

où f'(t) correspond également à la dérivée de la fonction f(t).

Le paramètre $a_k$ est alors défini par l'équation (c) suivante :

$$a_k = 2.\frac{\mu}{\sigma^2} \qquad (c)$$

et il est ainsi facilement déterminé à partir des valeurs de $\mu$ et $\sigma$ ainsi calculées.

Lorsque le second adsorbant vérifie en plus des conditions (i), (ii) et (iii), la condition (iv) : $ak_2 \geq ak_1$ énoncée ci-dessus, le procédé de l'invention permet d'aboutir au meilleur compromis entre le coût et les performances de la production.

Parmi les adsorbants répondant à ces quatre conditions (i), (ii), (iii) et (iv), ceux pour lesquels $ak_2$ satisfait l'équation (v) suivante forment un groupe d'adsorbants préféré :

$$ak_2/ak_1 \geq C_1/C_2 \qquad (v)$$

où $C_1$, $C_2$, $ak_1$ et $ak_2$ sont tels que définis précédemment. Dans ce cas, en effet, le procédé de l'invention permet une amélioration des performances, notamment en termes de productivité et de rendement, comparé à un procédé équivalent utilisant comme seul adsorbant un lit constitué d'une zéolite échangée au lithium.

Dans la zone d'adsorption, les premier et second adsorbants sont disposés de telle sorte que le mélange gazeux à séparer les traverse l'un après l'autre. L'ordre dans lequel a lieu la mise en contact du mélange gazeux avec lesdits premier et second adsorbants n'est pas essentiel pour assurer le succès de la séparation. Néanmoins, on a constaté que l'efficacité de la séparation pouvait être optimisée en plaçant, à l'entrée de la zone d'adsorption, ledit premier adsorbant (échangé au lithium) et en sortie de la zone d'adsorption, ledit second adsorbant (échangé par un ou plusieurs cations divalents) . Ainsi, le mélange contenant de l'oxygène et de l'azote à séparer vient tout d'abord au contact dudit premier adsorbant, puis ensuite au contact dudit second adsorbant.

Certaines valeurs du pourcentage massique dudit premier adsorbant, échangé au lithium, calculé par rapport à la masse totale d'adsorbant sont particulièrement avantageuses.

Bien que le domaine de variation préféré du pourcentage massique dudit premier adsorbant ne puisse être déterminé a priori, dans la mesure où celui-ci dépend du rapport des capacités, des sélectivités et des paramètres ak des deux adsorbants utilisés, on a observé un optimum de performances pour une proportion de zéolite au lithium comprise entre 40 et 90%, de préférence entre 50 et 80% par rapport à la quantité volumique totale desdits premier et second adsorbants.

La détermination du domaine préféré de variation de ce pourcentage massique est facile et sera réalisée expérimentalement par l'homme de l'art ou par modélisation en étudiant les variations des performances du procédé pour des valeurs données du rapport volumique des premier et second adsorbants. Ceci est, par ailleurs, illustrés ci-après dans les exemples.

Dans le cas où le second adsorbant est tel que son paramètre $ak_2$ vérifie l'équation (v) ci-dessous :

$$ak_2 / ak_1 \geq C_1/C_2 \qquad\qquad (v)$$

il est possible de déterminer la proportion dudit second adsorbant à utiliser en mélange avec ledit premier adsorbant de façon à obtenir un rendement maximal et/ou une productivité maximale.

On notera que les rendement et productivité maximaux atteints sont supérieurs aux rendement et productivité obtenus en utilisant un lit d'adsorbant exclusivement constitué de faujasite échangée à au moins 80% au lithium. Ainsi, l'invention s'inscrit en faux contre ce préjugé de l'état de la technique, selon lequel les performances d'un procédé de séparation de mélanges gazeux contenant de l'azote et de l'oxygène sont maximales lorsque l'adsorbant utilisé est constitué uniquement et en totalité d'une zéolite échangée au lithium ayant une forte capacité d'adsorption.

L'homme de l'art, spécialiste des zéolites, déterminera facilement les conditions expérimentales de préparation des zéolites fonctionnant en tant que premier et second adsorbants de façon à satisfaire chacune des conditions (ii), (iii), (iv) et (v) ci-dessus, en jouant notamment sur la porosité desdits adsorbants ou sur la granulométrie des agglomérats de zéolites utilisés.

On notera que pour des valeurs décroissantes de la taille des grains de zéolites agglomérées, le paramètre cinétique ak caractérisant l'adsorbant augmente. En outre, il est possible d'utiliser les zéolites sous la forme de poudres cristallines ou d'agglomérats, lesdits agglomérats étant obtenus de façon conventionnelle par mise en oeuvre des procédés classiques d'agglomération.

La zéolite agglomérée peut, par exemple, être préparée par mélange d'une poudre cristalline de zéolite avec de l'eau et un liant (généralement sous forme de poudre), puis pulvérisation de ce mélange sur des agglomérats de zéolite jouant le rôle de germe d'agglomération. Pendant la pulvérisation, les agglomérats de zéolite sont soumis à une rotation continue sur eux-mêmes. Ceci peut être réalisé en disposant les agglomérats dans un réacteur en rotation sur lui-même autour d'un axe incliné par rapport à la direction verticale. Par ce procédé, couramment désigné dans la technique par procédé "boule de neige" on obtient des agglomérats sous forme de billes.

Les agglomérats ainsi obtenus sont ensuite soumis à une cuisson à une température comprise entre environ 500 et 700°C, de préférence voisine de 600°C.

Comme exemples de liant, l'homme de l'art pourra recourir à une argile, telles le kaolin ou l'attapulgite, à de la silice ou à de l'alumine.

La zéolite agglomérée ainsi obtenue, laquelle comprend un liant, peut servir à la préparation de zéolite agglomérée sans liant également utilisable dans le procédé de l'invention. De façon à convertir le liant en phase zéolitique, on peut procéder, en effet, au traitement ultérieur des agglomérats zéolitiques avec liant, ce par quoi, après conversion du liant, on obtient des agglomérats zéolitiques sans liant.

Le taux d'échange caractérisant ledit second adsorbant est un autre des paramètres que peut ajuster l'homme du métier de façon à ce que les conditions (ii) à (v) ci-dessus soient effectivement remplies.

De fait, la capacité d'adsorption de l'azote varie en fonction de la teneur en cations $Ca^{2+}$ de la zéolite. En conséquence, la cinétique d'adsorption de l'azote de la zéolite est elle aussi fonction de la teneur globale en ions calcium. Ainsi, le paramètre $ak_2$ dépend-il directement de la teneur en ions calcium.

Le protocole expérimental suivant pourra être utilisé pour la préparation dudit second adsorbant à partir de la zéolite correspondante non-échangée : dans un réacteur chargé de la zéolite non-échangée, on ajoute sous agitation une solution aqueuse 1N d'un ou plusieurs sels de cations divalents, tel le chlorure de calcium. On porte l'ensemble du mélange réactionnel à une température comprise entre 40 et 80°C. Le taux d'échange est ajusté en régulant la quantité de cations divalents mis en présence de la phase solide zéolitique, étant entendu qu'en vue d'introduire une quantité donnée de cations, il suffit d'ajouter au réacteur une proportion calculable de cette quantité d'ions calcium. La zéolite est récupérée par simple filtration du mélange réactionnel, suivie éventuellement d'un lavage.

De telles zéolites échangées sont, par ailleurs, couramment disponibles dans le commerce.

Ainsi, l'homme de l'art dispose de nombreux paramètres lui permettant d'accéder sans difficulté à la mise au point du second adsorbant, ces différents paramètres devant être contrôlés lors du protocole de fabrication de façon connue en soi.

Selon un mode de réalisation particulier de l'invention, lesdits premier et second adsorbants seront obtenus à partir d'une même zéolite mère par échange d'ions. Ainsi, on traitera un premier lot de la zéolite mère par une solution aqueuse de sels de lithium de façon à isoler la faujasite échangée à au moins 80% au lithium et un second lot de la zéolite mère par une solution aqueuse d'un ou plusieurs sels de cations divalents, de façon à isoler la zéolite échangée par des cations divalents utilisée en tant que second adsorbant.

De cette manière, lesdits premier et second adsorbants présentent la même porosité, la même granulométrie, le même taux de liant et diffèrent principalement de par leur capacité d'adsorption de l'azote, leur sélectivité d'adsorption de l'azote par rapport à l'oxygène et leur paramètre ak.

Avant utilisation desdits premier et second adsorbants, une activation de ceux-ci est nécessaire; l'activation d'une zéolite étant sa déshydratation, c'est-à-dire l'élimination de l'eau d'hydratation qu'elle contient. De nombreux procédés d'activation des zéolites sont connus dans la technique. L'un d'eux consiste à soumettre la zéolite à une pression de $0,1.10^4$ Pa à $1.10^6$ Pa, tout en faisant passer un courant d'un gaz inerte (tel l'azote) au travers du lit de zéolite et en chauffant jusqu'à une température comprise entre 300 et 650°C à une vitesse de montée en température de 0,1 à 40°C/min. On peut aussi activer la zéolite, soit en la maintenant sous un vide d'environ $1.10^4$ Pa tout en la chauffant jusqu'à une température de 300 à 650°C (sans balayage par un gaz inerte), soit en utilisant des micro-ondes, tel que décrit dans le brevet US 4,322,394.

De façon à produire de l'oxygène en continu, il est connu de disposer en parallèle un certain nombre de lits d'adsorbant que l'on soumet en alternance à un cycle d'adsorption à pression haute et de désorption par abaissement de la pression.

De telles installations sont notamment mises en oeuvre dans les procédés PSA ou VSA. Le cycle de traitement auquel est soumis chaque lit d'adsorbant comprend des étapes consistant à :

a) faire passer un effluent gazeux constitué d'un mélange contenant de l'azote et de l'oxygène dans une zone d'adsorption comprenant, dans un ordre quelconque, un premier lit d'adsorbant constitué d'un premier adsorbant sélectif de l'azote, ledit premier adsorbant étant une zéolite de type faujasite échangée à au moins 80% au lithium dont le rapport Si/Al est inférieur à 1,5, et un second lit d'adsorbant constitué d'un second adsorbant sélectif de l'azote, ledit second adsorbant étant une zéolite échangée comprenant des cations divalents choisis dans le groupe constitué des cations de métaux alcalino-terreux et des cations de métaux de transition, ledit second adsorbant étant en outre caractérisé par :

- une capacité d'adsorption de l'azote $C_2$ inférieure à la capacité d'adsorption de l'azote $C_1$ caractérisant ledit premier adsorbant; et
- une sélectivité d'adsorption de l'azote par rapport à l'oxygène sous $1.10^5$ Pa et à 20°C supérieure à 3;

et récupérer de l'oxygène ou un mélange gazeux enrichi en oxygène;

b) désorber l'azote adsorbé dans chacun desdits premier et second lits d'adsorbants par abaissement de la pression partielle d'azote au sein de ladite zone d'adsorption;

c) remonter en pression ladite zone d'adsorption par introduction d'un courant d'oxygène ou d'air.

Ainsi, chaque lit d'adsorbant passe de façon cyclique par une phase a) de production de l'oxygène à haute pression, une phase b) de décompression et une phase c) de recompression.

Selon une variante de réalisation préférée, l'azote est évacué à l'étape b) par l'entrée de la zone d'adsorption.

Par ailleurs, lorsqu'un flux d'oxygène est utilisé pour la recompression de la zone d'adsorption, celui-ci est introduit à contre-courant, c'est-à-dire par la sortie de la zone d'adsorption. Par contre, lorsqu'un flux d'air est utilisé à cette étape, celui-ci est introduit à co-courant, c'est-à-dire par l'entrée de la zone d'adsorption.

De manière préférée, lors de l'étape a) la zone d'adsorption est alimentée en mélange contenant de l'azote et de l'oxygène à une pression comprise entre $1.10^5$ Pa et $1.10^6$ Pa, et à une température comprise entre -20 et +80°C.

De même, lors de l'étape b), il est particulièrement avantageux de maintenir la zone d'adsorption à une pression comprise entre $1.10^4$ Pa et $1.10^5$ Pa.

En outre, le fonctionnement de 1 à 3 lits d'adsorbants (c'est-à-dire 1 à 3 adsorbeurs) disposés en parallèle est chose courante dans la technique.

De façon à optimiser les procédés PSA ou VSA, il est avantageux d'introduire des étapes de pseudo-équilibrages de pression.

L'invention va maintenant être décrite en référence aux exemples de réalisation et aux figures.

La figure 1 représente l'évolution de la pression au sein d'une zone d'adsorption au cours d'un cycle de traitement de purification d'un mélange gazeux contenant de l'oxygène et de l'azote par un procédé PSA utilisant une installation à trois lits d'adsorbant (trois adsorbeurs en parallèle).

Sur la figure 2 annexée, sont représentées les courbes isothermes de variation de la capacité d'adsorption de l'azote de chacune des zéolites étudiées dans les exemples 1 à 5 ci-dessous, en fonction de la pression d'adsorption.

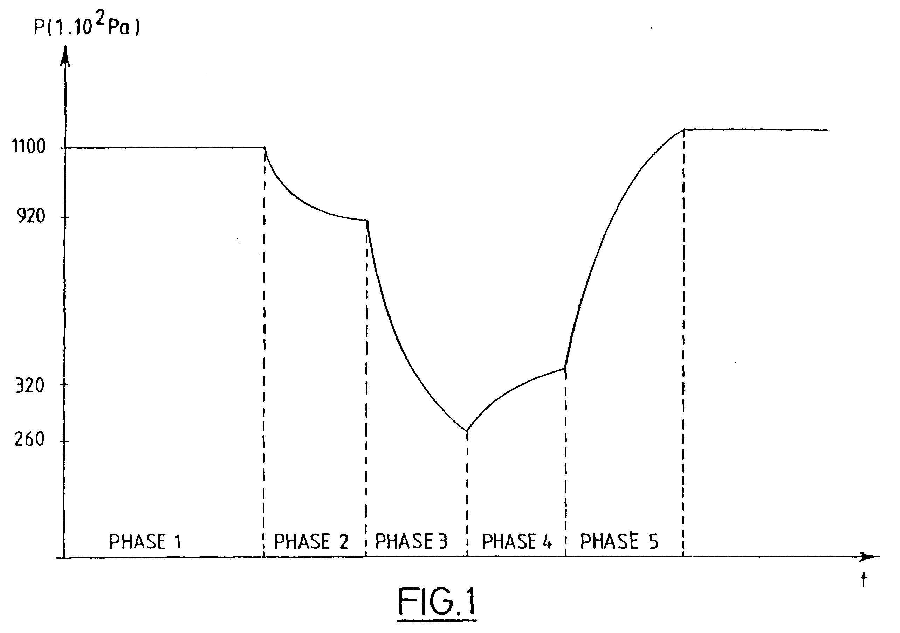

Il résulte clairement de la figure 1 que chaque lit d'adsorbant passe par 5 phases successives que l'on peut brièvement décrire comme suit :

- phase 1 : dans un premier temps, le lit initialement saturé en oxygène fonctionne en adsorption, c'est-à-dire que l'on fait passer en continu dans la zone d'adsorption un courant gazeux constitué du mélange (contenant de l'oxygène et de l'azote) à séparer et que l'on récupère en sortie de ladite zone d'adsorption l'oxygène gazeux pratiquement pur (ou un gaz enrichi en oxygène). Pendant toute cette phase, la pression au sein de la zone d'adsorption est maintenue constante et égale à $1,1.10^5$ Pa;

- phase 2 : avant que le front d'adsorption de l'azote n'ait quitté la zone d'adsorption, la phase de production est interrompue, c'est-à-dire que la zone d'adsorption n'est plus alimentée en mélange gazeux à séparer. Le lit d'adsorbant est alors relié à celui des 2 autres lits d'adsorbant entrant en phase de pseudo-équilibrage. La pression régnant au sein de ce second lit d'adsorption étant inférieure à $1,1.10^5$ Pa, l'oxygène récupéré en sortie du premier lit d'adsorbant passe donc dans le second lit d'adsorbant, ce qui contribue à abaisser la pression au sein de la première zone d'adsorption;

- phase 3 : à l'étape suivante l'azote adsorbé sur l'adsorbant est désorbé par réduction progressive de la pression au sein de la zone d'adsorption; pour ce faire on relie l'entrée de ladite zone à une pompe à vide. Au cours de cette phase de décompression la zone d'adsorption passe de $0,92.10^5$ Pa à $0,26.10^5$ Pa (la sortie de la zone d'adsorption étant maintenue hermétiquement fermée);

- phase 4 : à l'issue de la phase de décompression, la zone d'adsorption passe en phase de pseudo-équilibrage. De façon à monter la pression de la zone d'adsorption, celle-ci est reliée à celui des 2 autres lits d'adsorbant qui, en fin de phase de production, entre en phase 2. Ainsi, l'oxygène produit et récupéré en sortie de ce second lit d'adsorbant contribue à augmenter la pression du premier lit d'adsorbant. Cette étape ne conduit cependant pas à une égalisation de pression au sein des deux lits d'adsorbant dans la mesure où le courant d'oxygène provenant du second lit d'adsorbant est introduit à contre-courant en sortie de la première zone d'adsorption, circule librement au sein de ladite première zone d'adsorption avant d'être évacué par l'entrée de ladite première zone d'adsorption;

- phase 5 : lorsque la pression de la zone d'adsorption atteint $0,32.10^5$ Pa, on procède à la recompression du lit d'adsorbant. Pour ce faire, l'entrée de la zone d'adsorption étant maintenue hermétiquement close, on introduit par la sortie de ladite zone d'adsorption, à contre-courant, un flux d'oxygène pur jusqu'à atteindre la pression souhaitée de $1,1.10^5$ Pa.

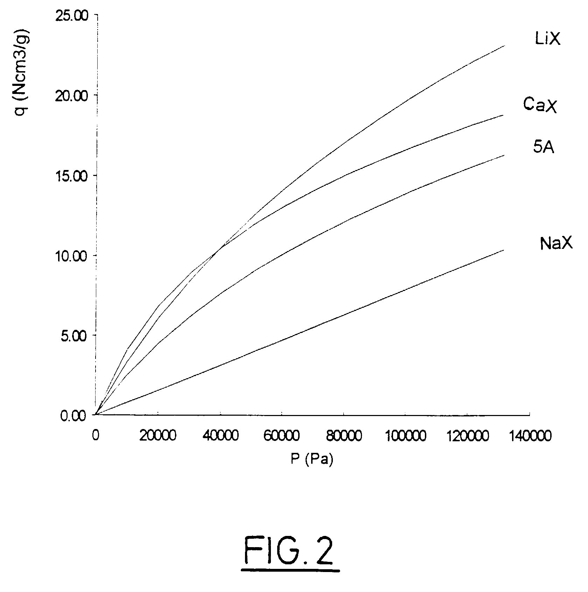

Les isothermes de la figure 2 rapportent les variations de la capacité d'adsorption de l'azote en fonction de la pression d'adsorption dans le cas :

- d'une zéolite 13X (faujasite) échangée à 95% au lithium (référence LiX sur la figure)
- de cette zéolite 13X échangée à 70% au calcium (réf. CaX);
- d'une zéolite 5A échangée à 70% au calcium (réf. 5A);
- et d'une zéolite X non échangée (réf. NaX).

Les références précises des zéolites utilisées sont données ci-dessous dans la description.

La faujasite échangée à 95% au lithium est préparée de la façon suivante au départ de la faujasite 13X-APG commercialisée par la Société UOP. Au travers d'une colonne garnie de 1 kg de cette faujasite, on fait percoler une solution aqueuse 1,94 N de chlorure de lithium, dont on a préalablement ajusté le pH à 8, par addition de lithine; la colonne étant maintenue à 95°C.

Sur les courbes de la figure 2, on a porté la quantité q d'azote adsorbé (en $Ncm^3/g$) en ordonnées et la pression d'adsorption (en Pa) en abscisses.

Ces courbes ont été tracées à 20°C par analyse volumétrique au moyen d'un appareil Sorptomatic MS 190 commercialisé par FISONS, après activation sous vide des zéolites à 400°C pendant 8 h.

## Exemples

Dans les exemples 1 à 5 suivants, on a simulé sur ordinateur un cycle PSA à haute productivité comprenant 5 phases de traitement mises en oeuvre dans 3 zones d'adsorption distinctes fonctionnant en parallèle.

Le cycle complet de traitement (illustré à la figure 1) dure 90 s, à savoir 30 s de production (phase 1), 30 s pour l'ensemble des phases 2 et 3, et 30 s pour l'ensemble des phases 4 et 5.

La productivité correspond au volume d'oxygène produit, mesuré dans les conditions normales de température et de pression, par unité massique ou volumique d'adsorbant. On distingue la productivité horaire, où le volume d'oxygène mesuré est le volume d'oxygène produit toutes les heures, de la productivité par cycle, où le volume d'oxygène mesuré est le volume d'oxygène produit au cours d'un cycle PSA (5 phases).

Le rendement est le rapport du volume d'oxygène produit pendant une période de temps donnée, mesuré dans les conditions normales de température et de pression, au volume d'oxygène contenu dans le mélange initial à séparer, mesuré dans les conditions normales de température et de pression.

Le programme utilisé pour la simulation repose sur les principes de conservation de la masse, de conservation de l'enthalpie, de conservation de la quantité de mouvement et utilise le modèle de la Linear Driving Force pour l'évaluation de la cinétique des transferts solide-gaz au sein de la masse d'adsorbant. De tels modèles de simulation sont notamment décrits dans Pressure Swing Adsorption, Ruthven, Farooq et Knaebel, VCH Publishers, 1994, pages 172-209; et dans Fluid Flow Through Packed Columns, S. Ergun, Chem. Engr. Prog., 48(2), 89 (1952). La résolution des équations peut, quant à elle, être réalisée par exemple au moyen du programme DIVPAG de la Bibliothèque Mathématique IMSL (International Mathematical & Statistical Library commercialé par la société Microsoft ©; ou du programme ADSIM commercialisé par la société AspenTech ©.

L'homme de l'art est parfaitement en mesure de choisir un programme de simulation adéquat parmi les nombreux programmes disponibles sur le marché et d'y introduire les données précédentes. Si besoin est, on peut également se reporter à l'article de D.G. Hartzog et S.Sircar; Adsorption, 1, 133-151 (1995), Sensitivity of PSA Process Performance to Input Variables, décrivant un programme similaire.

Dans les exemples 1 à 5, le mélange gazeux, contenant de l'oxygène et de l'azote, à séparer est de l'air et les zéolites utilisées sont couramment accessibles dans le commerce. Plus précisément :

- la faujasite échangée au lithium (utilisée comme premier adsorbant; ci-après 13X-Li ou LiX) est obtenue, comme expliqué ci-avant, à partir d'une zéolite de type 13X (faujasite), commercialisée par la société UOP sous la référence 13X-APG, laquelle est soumise à un échange d'ions lithium (échange à 95%);
- la zéolite 13X échangée au calcium (utilisée comme second adsorbant; ci-après 13X-Ca ou CaX) est aussi obtenue à partir de la zéolite 13X-APG, laquelle est soumise à un échange de cations $Ca^{2+}$ (échange à 70%);
- la zéolite 5A échangée au calcium (utilisée comme second adsorbant; ci-après 5A-Ca ou 5A) est obtenue à partir d'une zéolite de type 5A commercialisée par la société BAYER sous la référence KEG-407, laquelle est soumise à un échange de cations $Ca^{2+}$ (échange à 70%).

Les capacités d'adsorption d'azote et d'oxygène (à 20°C et $10^5$ Pa) et les sélectivités de ces différents adsorbants sont données dans le tableau suivant :

| Adsorbant | 13X-Li | 13X-Ca | 5A-Ca |
|---|---|---|---|
| Capacité de $N_2$ | 19.86 | 16.78 | 14.02 |
| Capacité de $O_2$ | 3.61 | 4.42 | 4.06 |
| Sélectivité | 5.50 | 3.79 | 3.46 |

Les capacités d'adsorption d'azote et d'oxygène sont exprimées en $Ncm^3/g$.

## Exemple 1

Dans cet exemple, on a étudié l'influence de la proportion (en % volume) de faujasite échangée au lithium (13X-Li) par rapport à celle de zéolite 5A échangée au calcium (5A-Ca) sur la productivité et le rendement du cycle PSA de la figure 1.

Pour ce faire, on a fait varier la composition du lit d'adsorbant entre un rapport en pourcentage volumique 90/10 % (13X-Li/5A-Ca) et un rapport volumique 50/50 % (cf. Compositions 1a à 1e).

En d'autres termes, on a fait varier le rapport volumique du premier lit d'adsorbant de type faujasite au lithium (zéolite 13X échangée à 95% au lithium) au second lit d'adsorbant de type zéolite 5A-Ca (zéolite 5A échangée à 70% au calcium) constituant le deuxième lit d'adsorbant.

Par ailleurs, les deux zéolites 13X-Li et 5A-Ca sont telles que le rapport de leurs paramètres ak respectifs est de 1,5 ($ak_2/ak_1 = 1,5$).

Le tableau 1 ci-dessous rapporte les valeurs de productivité horaire et de rendement trouvées dans chaque cas (compositions 1a à 1e).

TABLEAU 1

| Compositions | 1a | 1b | 1c | 1d | 1e |
|---|---|---|---|---|---|
| % 13X-Li | 90 | 80 | 70 | 60 | 50 |
| % 5A-Ca | 10 | 20 | 30 | 40 | 50 |
| Rendement | 62.74 | 63.17 | 62.58 | 61.87 | 61.05 |
| Productivité ($Nm^3.h^{-1}.m^{-3}$ d'adsorbant) | 36.25 | 36.09 | 35.05 | 33.93 | 32.76 |

L'oxygène produit est pur à 93%.

Les résultats consignés dans le tableau 1 précédent montrent que dans ce cas ($ak_2/ak_1 = 1.5$), il existe des optima de productivité et de rendement pour un rapport volumique (13X-Li/5A-Ca) compris entre 90/10% et 80/20 %.

**Exemple 2**

Dans cet exemple, le protocole opératoire est le même qu'à l'exemple 1, mis à part que le rapport des paramètres cinétiques est, dans ce cas, de 2 ($ak_2/ak_1 = 2$) et que la composition du lit d'adsorbant varie entre un rapport en pourcentage volumique 100/0% (13X-Li/5A-Ca) et un rapport volumique 50/50% (Compositions 2a à 2f).

Les résultats obtenus figurent dans le tableau 2 ci-après.

TABLEAU 2

| Compositions | 2a | 2b | 2c | 2d | 2e | 2f |
|---|---|---|---|---|---|---|
| % 13X-Li | 100 | 90 | 80 | 70 | 60 | 50 |
| % 5A-Ca | 0 | 10 | 20 | 30 | 40 | 50 |
| Rendement | 60.36 | 59.25 | 61.66 | 61.77 | 61.30 | 60.58 |
| Productivité ($Nm^3.h^{-1}.m^{-3}$ d'adsorbant) | 33.72 | 33.51 | 34.87 | 34.33 | 33.41 | 32.35 |

L'oxygène produit est pur à 93%.

Les résultats consignés dans le tableau 2 précédent montrent que, dans ce cas ($ak_2/ak_1 = 2$), il existe des optima de productivité horaire et de rendement pour un rapport volumique compris entre 80/20% et 70/30% (13X-Li/5A-Ca), lesquels rendement et productivité sont, par ailleurs, supérieurs à ceux obtenus pour un adsorbant uniquement constitué de zéolite au lithium (composition 2a).

**Exemple 3**

Dans cet exemple, le protocole opératoire est le même qu'à l'exemple 1, mis à part que le rapport des paramètres cinétiques est, dans ce cas, de 3 ($ak_2/ak_1 = 3$) et que la composition du lit d'adsorbant varie entre un rapport en pourcentage volumique 100/0% (13X-Li/5A-Ca) et un rapport volumique 0/100% (Compositions 3a à 3g).

On a obtenu les résultats résumés dans le tableau 3 ci-dessous.

TABLEAU 3

| Compositions | 3a | 3b | 3c | 3d | 3e | 3f | 3g |
|---|---|---|---|---|---|---|---|
| % 13X-Li | 100 | 90 | 80 | 70 | 60 | 50 | 0 |

TABLEAU 3   (suite)

| Compositions | 3a | 3b | 3c | 3d | 3e | 3f | 3g |
|---|---|---|---|---|---|---|---|
| % 5A-Ca | 0 | 10 | 20 | 30 | 40 | 50 | 100 |
| Rendement | 51.28 | 51.55 | 57.26 | 59.49 | 59.76 | 59.52 | 53.82 |
| Productivité ($Nm^3.h^{-1}.m^{-3}$ d'adsorbant) | 26.87 | 27.51 | 31.42 | 32.45 | 32.11 | 31.44 | 25.34 |

L'oxygène produit est pur à 93%.

Les résultats consignés dans le tableau 3 précédent montrent que dans ce cas ($ak_2/ak_1 = 3$), il existe des optima de productivité horaire et de rendement pour un rapport volumique faujasite au lithium/zéolite au calcium se situant entre les rapports 70/30% et 60/40%, lesquels rendement et productivité sont nettement supérieurs à ceux obtenus pour un adsorbant uniquement constitué de zéolite au lithium (échangées à 95 %) et illustrés par la composition 3a (lit constitué de 100% de 13X-Li).

En résumé, les exemples précédents montrent clairement que les performances optimales ne sont pas obtenues pour une proportion de 100% de zéolite au lithium et qu'il est non seulement possible, mais aussi souhaitable de remplacer une partie du lit d'adsorbant constitué par une zéolite échangée au lithium (faujasite), par une quantité équivalente en poids de zéolite échangée par un cation divalent, tel le calcium.

**Exemple 4**

Dans cet exemple, le protocole opératoire est le même qu'à l'exemple 1, mis à part que le rapport des paramètres cinétiques est, dans ce cas, de 3 ($ak_2/ak_1 = 3$) et que la composition du lit d'adsorbant varie de la manière suivante :

-    composition 4a : rapport en pourcentage volumique faujasite au lithium/zéolite 13X au calcium égal à 100/0% (13X-Li/13X-Ca);

-    et composition 4b : rapport faujasite au lithium/zéolite 13X au calcium égal à 60/40 %.

On a obtenu les résultats résumés dans le tableau 4 ci-dessous.

TABLEAU 4

| Compositions | 4a | 4b |
|---|---|---|
| % 13X-Li | 100 | 60 |
| % 13X-Ca | 0 | 40 |
| Rendement | 51.28 | 59.95 |
| Productivité ($Nm^3.h^{-1}.m^{-3}$ d'adsorbant) | 26.87 | 32.59 |

L'oxygène produit est pur à 93%.

Cet exemple 4 montre que lorsqu'on remplace le lit de deuxième adsorbant de type zéolite 5A-Ca par un lit d'un deuxième adsorbant de type zéolite 13X-Ca, on obtient, comme dans les exemples 1 à 3, des performances (rendement et productivité horaire) supérieures à celles obtenues pour un lit constitué uniquement d'un adsorbant de type zéolite au lithium (rapport 100/0% de la composition 4a).

**Exemple 5**

Les conditions opératoires de cet exemple sont identiques à celles de l'exemple précédent, sinon que le lit d'adsorbant est constitué :

-    composition 5a : faujasite échangée à 95% au lithium (13X-Li); et

-    composition 5b : premier adsorbant de type faujasite au lithium (13X-Li) et deuxième adsorbant de type zéolite X non échangée (X-Na), c'est-à-dire ne comprenant que des cations sodium dans sa structure cristalline. Les capacités d'adsorption d'azote et d'oxygène (20°C, $10^5$ Pa) de cette zéolite X non échangée sont, respectivement, égales à 8.00 $Ncm^3$/g et 2.50 $Ncm^3$/g; sa sélectivité étant égale à 3.20.

Cet exemple comparatif correspond, en fait, à un cas similaire à celui décrit par le brevet précité US 5,203,887, lequel illustre l'art antérieur, à savoir un premier lit d'adsorbant constitué d'une zéolite échangée au lithium et un deuxième lit constitué d'une zéolite non échangée.

Les caractéristiques de ladite zéolite non-échangée Na (réf. X-Na ou NaX) sont les suivantes :

- sa capacité d'adsorption de l'azote est proportionnelle à la pression d'adsorption (isotherme linéaire);
- sa capacité d'adsorption de l'azote sous $1.10^5$ Pa et à 20°C est de 8 $cm^3$ normaux/g;
- sa sélectivité d'adsorption de l'azote par rapport à l'oxygène sous $1.10^5$ Pa et à 20°C est de 3,2; et
- son coefficient cinétique $ak_2$ est identique à celui de la zéolite 5A du lit d'adsorbant mis en jeu dans les exemples 1 à 3.

Plus précisément, le rapport $ak_2/ak_1$ des coefficients cinétiques de la zéolite au lithium à la zéolite non-échangée X-Na est de 3.

Les résultats obtenus ont été rapportés dans la tableau 5 ci-dessous.

TABLEAU 5

| Composition | 5a | 5b |
|---|---|---|
| % 13X-Li | 100 | 60 |
| % X-Na | 0 | 40 |
| Rendement | 51.28 | 54.6 |
| Productivité ($Nm^3.h^{-1}.m^{-3}$ d'adsorbant) | 26.87 | 25.89 |

Dans cet exemple, l'oxygène obtenu est pur à 93 %.

La comparaison de cet exemple 5 aux exemples précédents prouve la supériorité de la combinaison faujasite au lithium/zéolite échangée par un cation divalent (cas de la présente invention) sur une combinaison zéolite au lithium/zéolite non-échangée (US 5,203,887), puisque dans ce dernier cas, les rendement et productivité horaire chutent respectivement d'environ 10 % et 20 % (pourcentages relatifs) par rapport aux résultats obtenus, par exemple 4, en mettant en oeuvre le procédé de l'invention.

**Revendications**

1. Procédé de séparation d'un mélange gazeux contenant de l'oxygène et de l'azote, comprenant la mise en contact dudit mélange à séparer dans une zone d'adsorption, avec, dans un ordre quelconque, un premier adsorbant sélectif de l'azote, ledit premier adsorbant étant une zéolite de type faujasite échangée à au moins 80% au lithium dont le rapport Si/Al est inférieur à 1,5 et un second adsorbant sélectif de l'azote, ledit second adsorbant étant une zéolite échangée par des cations divalents choisis dans le groupe formé par les cations de métaux alcalino-terreux et les cations de métaux de transition, ledit second adsorbant étant caractérisé par :

   - une capacité d'adsorption de l'azote $C_2$ inférieure à la capacité d'adsorption de l'azote $C_1$ caractérisant le premier adsorbant; et
   - une sélectivité d'adsorption de l'azote par rapport à l'oxygène sous $1.10^5$ Pa et à 20°C supérieure ou égale à 3.

2. Procédé selon la revendication 1, caractérisé en ce que le paramètre $ak_2$ dudit second adsorbant vérifie l'équation (iv) suivante :

$$ak_2 \geq ak_1 \qquad\qquad (iv),$$

lesdits paramètres $ak_1$ et $ak_2$ caractérisant la cinétique d'adsorption de l'azote respectivement sur lesdits premier et second adsorbants conformément au modèle de la Linear Driving Force.

3. Procédé selon la revendication 2, caractérisé en ce que le paramètre $ak_2$ dudit second adsorbant vérifie l'équation suivante :

$$ak_2 \geq 2.ak_1$$

4. Procédé selon la revendication 3, caractérisé en ce que le paramètre $ak_2$ dudit second adsorbant vérifie l'équation suivante :

$$ak_2 \geq 3.ak_1$$

5. Procédé selon l'une quelconque des revendications 1 à 4, caractérisé en ce que le paramètre $ak_2$ dudit second adsorbant vérifie l'équation (v) suivante :

$$ak_2 / ak_1 \geq C_1/C_2 \tag{v},$$

lesdits paramètres $ak_1$ et $ak_2$ caractérisant la cinétique d'adsorption de l'azote respectivement sur lesdits premier et second adsorbants conformément au modèle de la Linear Driving Force, et $C_1$ et $C_2$ étant tels que définis à la revendication 1.

6. Procédé selon l'une quelconque des revendications 1 à 5, caractérisé en ce que le mélange contenant de l'azote et de l'oxygène est l'air.

7. Procédé selon l'une quelconque des revendications 1 à 6, caractérisé en ce que l'on récupère de l'oxygène ou un mélange gazeux enrichi en oxygène.

8. Procédé selon l'une quelconque des revendications 1 à 6, caractérisé en ce que la capacité d'adsorption de l'azote dudit second adsorbant, sous $1.10^5$ Pa et à 20°C, est supérieure ou égale à 12 g/cm³, de préférence supérieure ou égale à 14 g/cm³.

9. Procédé selon l'une quelconque des revendications précédentes, caractérisé en ce que la sélectivité d'adsorption de l'azote par rapport à l'oxygène dudit second adsorbant sous $1.10^5$ Pa et à 20°C est supérieure à 3,2.

10. Procédé selon l'une quelconque des revendications précédentes, caractérisé en ce que ledit second adsorbant est une zéolite échangée comprenant en tant que cations métalliques des ions $Na^+$ et des cations divalents choisis parmi $Ca^{2+}$, $Mg^{2+}$, $Ba^{2+}$ et $Sr^{2+}$.

11. Procédé selon l'une quelconque des revendications précédentes, caractérisé en ce que ledit second adsorbant est une zéolite 10X échangée au calcium ou une zéolite 5A échangée au calcium.

12. Procédé selon l'une quelconque des revendications précédentes, caractérisé en ce que le pourcentage du premier adsorbant par rapport à la quantité totale des premier et second adsorbants est comprise entre 40 et 90%, de préférence entre 50 et 80%.

13. Procédé selon l'une quelconque des revendications précédentes, caractérisé en ce que ledit premier adsorbant est une faujasite échangée à au moins 86% au lithium, de préférence à au moins 90% au lithium.

14. Procédé selon l'une quelconque des revendications précédentes, caractérisé en ce que le mélange, contenant de l'oxygène et de l'azote, à séparer est successivement mis en contact avec le premier adsorbant, puis avec le second adsorbant.

15. Procédé selon l'une quelconque des revendications précédentes, caractérisé en ce qu'il comprend la mise en oeuvre d'un cycle de traitement comprenant des étapes consistant à :

a) faire passer un mélange gazeux contenant de l'azote et de l'oxygène, dans une zone d'adsorption comprenant un premier lit d'adsorbant constitué d'un premier adsorbant sélectif de l'azote, ledit premier adsorbant étant une zéolite de type faujasite échangée à au moins 80% au lithium dont le rapport Si/Al est inférieur à 1,5, et un second lit d'adsorbant constitué d'un second adsorbant sélectif de l'azote, ledit second adsorbant étant une zéolite échangée comprenant des cations divalents choisis dans le groupe constitué des cations de métaux alcalino-terreux et des cations de métaux de transition, le second adsorbant étant caractérisé par :

- une capacité d'adsorption de l'azote $C_2$ inférieure à la capacité d'adsorption de l'azote $C_1$ caractérisant le premier adsorbant; et
- une sélectivité d'adsorption de l'azote par rapport à l'oxygène sous $1.10^5$ Pa et à 20°C supérieure à 3;

et récupérer de l'oxygène ou un mélange gazeux enrichi en oxygène;

b) désorber l'azote adsorbé dans chacun des premier et second lits d'adsorbants par abaissement de la pression partielle d'azote au sein de ladite zone d'adsorption;

c) remonter en pression ladite zone d'adsorption par introduction d'un courant d'oxygène ou d'air.

16. Procédé selon la revendication 15, caractérisé en ce que lors de l'étape a), la zone d'adsorption est alimentée en mélange gazeux contenant de l'azote et de l'oxygène à une pression comprise entre $1.10^5$ Pa et $1.10^6$ Pa et à une température comprise entre -20 et +80°C.

17. Procédé selon l'une des revendications 15 ou 16, caractérisé en ce que à l'étape b) la pression d'oxygène au sein de la zone d'adsorption est comprise entre $1.10^4$ Pa et $1.10^5$ Pa.

18. Procédé selon la revendication 15, caractérisé en ce qu'à l'étape c), le flux d'oxygène est introduit à contre-courant.

19. Procédé selon la revendication 15, caractérisé en ce qu'à l'étape c), le flux d'air est introduit à co-courant.

FIG.1

EP 0 827 771 A1

## FIG.2

**EP 0 827 771 A1**

Office européen
des brevets

**RAPPORT DE RECHERCHE EUROPEENNE**

Numéro de la demande

EP 97 40 1888

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | US 5 529 610 A (WATSON CHARLES F ET AL) 25 juin 1996 <br> * le document en entier * <br> --- | 1-19 | B01D53/04 <br> B01D53/047 <br> B01J20/18 <br> C01B13/02 |
| A,D | US 5 203 887 A (TOUSSAINT LEE J) 20 avril 1993 <br> * le document en entier * <br> --- | 1-19 | |
| A | EP 0 374 631 A (BAYER AG) 27 juin 1990 <br> * le document en entier * <br> --- | 1-19 | |
| A | PATENT ABSTRACTS OF JAPAN <br> vol. 011, no. 379 (C-463), 10 décembre 1987 <br> & JP 62 148304 A (NIPPON SANSO KK), 2 juillet 1987, <br> * abrégé * <br> --- | 1-19 | |
| A | PATENT ABSTRACTS OF JAPAN <br> vol. 012, no. 202 (C-503), 10 juin 1988 <br> & JP 63 004824 A (TOSOH CORP), 9 janvier 1988, <br> * abrégé * <br> ----- | 1,10-12 | |

DOMAINES TECHNIQUES RECHERCHES (Int.Cl.6)

B01D
B01J
C01B

Le présent rapport a été établi pour toutes les revendications

| Lieu de la recherche | Date d'achèvement de la recherche | Examinateur |
|---|---|---|
| LA HAYE | 27 novembre 1997 | Bogaerts, M |

EPO FORM 1503 03 82 (P04C02)